# EUROPEAN PATENT SPECIFICATION

(11) **EP 3 403 230 B1**
(45) Date of publication and mention of the grant of the patent: **28.02.2024**
(21) Application number: 17738268.6
(22) Date of filing: 13.01.2017
(51) Int. Cl.: G06Q 30/0226, G06Q 30/0241, G06Q 20/32, G06Q 30/02, G06K 19/06, H04W 4/00, G06Q 20/38, G06Q 20/20, G06K 7/10, G06K 7/14, H04W 4/20, H04W 4/80

(54) **BEACON-ACTIVATED AUTOMATIC GENERATION OF SCAN TARGETS AND SCAN RESPONSES**
BAKENAKTIVIERTE AUTOMATISCHE ERZEUGUNG VON SCAN-ZIELEN UND SCAN-ANTWORTEN
GÉNÉRATION AUTOMATIQUE ACTIVÉE PAR BALISE DE CIBLES D'EXPLORATION ET DE RÉPONSES D'EXPLORATION

(30) Priority: 17.01.2016 US 201662279827 P
(43) Date of publication of application: 21.11.2018
(73) Proprietor: Socket Mobile, Inc., Fremont, CA 94538 (US)
(72) Inventor: COLI, Vincent J., Mountain View, California 94040 (US); OTT, Leonard, Livermore, California 94550 (US)
(74) Representative: Gill Jennings & Every LLP
(86) International application number: PCT/IB2017/050172
(87) International publication number: WO 2017/122156

(56) References cited:
- KR-A- 20100 130 530
- KR-A- 20150 105 796
- US-A1- 2010 125 492
- US-A1- 2014 197 235
- US-A1- 2014 249 928
- US-A1- 2015 073 980
- US-A1- 2015 278 829
- US-A1- 2015 287 037
- US-A1- 2015 332 252
- US-B1- 8 459 560
- Erik Vlugt: "BLUETOOTH LOW ENERGY, BEACONS AND RETAIL", , 23 October 2013 (2013-10-23), XP055481893, San Jose, CA Retrieved from the Internet: URL:https://web.archive.org/web/2014111015 1806/http://global.verifone.com/media/3603 729/bluetooth-low-energy-beacons-retail-wp .pdf [retrieved on 2018-06-07]

## Description

### BACKGROUND

Field: Advancements in in-store customer transaction technology are needed to provide improvements in cost, profitability, performance, efficiency, and utility of use.

Related Art: Unless expressly identified as being publicly or well known, mention herein of techniques and concepts, including for context, definitions, or comparison purposes, should not be construed as an admission that such techniques and concepts are previously publicly known or otherwise part of the prior art.

Small businesses need to offer in-store personalized customer loyalty experiences to be competitive with larger businesses and thereby retain and expand their customer base. Small business in-store customer transaction technology offerings need to do a better job of taking into account customer motivations and expectations over a wide range of situations.
US2010/0125492 discloses systems, methods and devices for providing electronic advertisements.
"Bluetooth low Energy, Beacons and Retail", Erik Vlugt (23 October 2013) discusses beacons and beacon applications in a retail environment
US2015/0073980 discloses one or more Bluetooth low energy beacons in communication with a remote server that provide check-in and payment capabilities.
US 2015/287037 A1, US 8 459 560 B1, and US 2014/197235 A1 disclose transaction processing systems including payment by mobile devices.

### SYNOPSIS

In contexts such as in-store customer transactions, a first party operates a terminal comprising a Beacon, an NFC-Engine, and optionally an Optical Scan Engine. A Beacon payload comprising particular data activates a corresponding pre-installed software application on an in-range second party's mobile device. The activated application prepares a customized scan target for subsequent presentation at the terminal. The scan target is a dynamically generated NFC tag, QR Code, or other scan target. The scan target comprises data derived from one or more of location context provided by the Beacon payload, second party ID, and second party transaction guidance. The second party confirms the transaction by presenting their mobile device at the terminal. The application prepares a customized payload, broadcast by the mobile device and observed by the terminal prior to the second party's arrival at the terminal, to optimally configure terminal operation for an upcoming transaction. Aspects of the invention and preferred embodiments are set out in the attached claims.

### Brief Description of Drawings

Fig. 1 illustrates, via a structural perspective, embodiments for the beacon-activated automatic generation of scan targets and scan responses.
Fig. 2 illustrates, via a temporal perspective, activities, states, and interrelationships between various components of the system of Fig. 1.

### List of Reference Symbols in Drawings

| **Ref. Symbol** | **Element Name** |
|---|---|
| **1000** | System |
| **1100** | Terminal |
| **1110** | Optical Scan Zone |
| **1120** | NFC Tap Zone |
| **1130** | Surface |
| **1140** | External Power |
| **1200** | Terminal Stand |
| **1210** | Base |
| **1211** | NFC-Engine (of Base 1210) |
| **1213** | Beacon-Engine |
| **1214** | PWR-SS (Power Subsystem) |
| **1215** | Battery |
| **1220** | Support Member(s) |
| **1221** | BLE-Radio (of NFC-Engine 1211) |
| **1221A** | Antenna (in Base 1210, coupled to BLE-Radio 1221) |
| **1221N** | Antenna (near top of Support Member(s) 1220, coupled to BLE-Radio 1221) |
| **1223** | BLE-Radio (of Beacon-Engine 1213) |
| **1225** | Display (coupled to Display I/F 1233) |
| **1230** | Shared-SS (Shared Subsystem) |
| **1231** | Status UI |
| **1232** | NVM |
| **1233** | Display I/F |
| **1234** | USB I/O |
| **1240** | Scanner Perch |
| **1300** | Scanner |
| **1310** | Optical Scan Engine |
| **1320** | Radio-SS (Radio Subsystem of Scanner 1300) |
| **1400** | Management/Point-Of-Sale (POS) Tablet |
| **1401** | Radio-SS (Radio Subsystem of Tablet 1400) |
| **1404** | Display (of Tablet 1400) |
| **1405** | Buttons (of Tablet 1400) |
| **1406** | NV Storage (of Tablet 1400) |
| **1407** | Program Storage |
| **1410** | Database Storage (of Tablet 1400) |
| **1500** | Mobile or Wearable |
| **1501** | Radio-SS (Radio Subsystem of Mobile or Wearable 1500) |
| **1502** | NFC-Engine (of Mobile or Wearable 1500) |
| **1503** | NFC NVM |
| **1504** | Display (of Mobile or Wearable 1500) |
| **1505** | Buttons (of Mobile or Wearable 1500) |
| **1506** | NV Storage (of Mobile or Wearable 1500) |
| **1600** | Private LAN |
| **1601** | Private WiFi Hot Spot / Router |
| **1605** | Private Local Server |
| **1610** | Database Storage (of Server 1605) |
| **1700** | Internet |
| **1701** | Public WiFi Hot Spot / Router |
| **1705** | Private Remote Server |
| **1710** | Database Storage (of Server 1705) |
| **1750** | Off-site |
| **1800** | Coupon or Card |
| **1803** | NFC Tag |
| **1804** | Static QR Code |
| **1805** | Contactless SmartCard Chip |
| **2000** | Timing |
| **2001** | Interval 1 |
| **2002** | Interval 2 |
| **2003** | Interval 3 |
| **2004** | Interval 4 |
| **2010** | Beacon Activity |
| **2011** | Advertising Data (of Interval 1) |
| **2012** | Advertising Data (of Interval 2) |
| **2013** | Advertising Data (of Interval 3) |
| **2014** | Advertising Data (of Interval 4) |
| **2020** | Other Base Activity |
| **2021** | Notify Host |
| **2022** | NFC Config. (Configure) |
| **2023** | Tap Event |
| **2024** | NFC "Read" |
| **2030** | Mobile BLE GAP Activity |
| **2031** | Scan Response Data |
| **2040** | Mobile In-Range-of-Beacon State |
| **2050** | Mobile Loyalty-App-Active State |
| **2060** | Mobile Target-Ready (NFC Tag or Barcode) State |
| **2080** | Mobile QR Code in-Scan-Zone State |
| **2090** | Host (Terminal Manager) Activity |
| **2091** | Scanner Config. (Configure) |
| **2100** | Scanner Activity |
| **2101** | Good Decode |

### DETAILED DESCRIPTION

### INTRODUCTION

This introduction is included only to facilitate the more rapid understanding of the Detailed Description; the invention is not limited to the concepts presented in the introduction (including explicit examples, if any), as the paragraphs of any introduction are necessarily an abridged view of the entire subject and are not meant to be an exhaustive or restrictive description. For example, the introduction that follows provides overview information limited by space and organization to only certain embodiments. There are many other embodiments, including those to which claims will ultimately be drawn, discussed throughout the balance of the specification.

At least some of the various shorthand abbreviations (e.g. acronyms) listed following refer to certain elements referenced herein.

| | |
|---|---|
| AC | Alternating Current |
| BLE | BLuetooth Low Energy |
| DC | Direct Current |
| DVI | Digital Visual Interface |
| EMV | Europay MasterCard Visa |
| GAP | Generic Access Profile |
| HDMI | High Definition Multimedia Interface |
| I/F | InterFace |
| I/O | Input/Output |
| ID | IDentification |
| LAN | Local Area Network |
| LED | Light Emitting Diode |
| NFC | Near Field Communication |
| NV | Non-Volatile |
| NVM | Non-Volatile Memory |
| QR | Quick Response |
| UI | User Interface |
| USB | Universal Serial Bus |
| VGA | Video Graphics Adapter |

### CUSTOMER LOYALTY TERMINAL - STRUCTURAL PERSPECTIVE

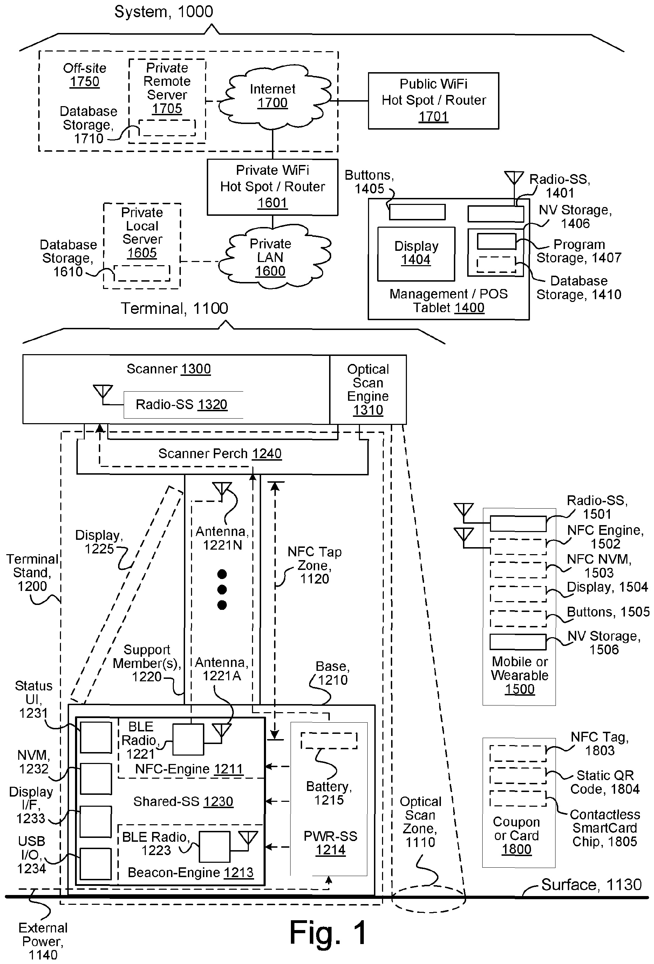

Fig. 1 illustrates, via a structural perspective, embodiments for the beacon-activated automatic generation of scan targets and scan responses, as System **1000.** In some embodiments, a system comprises Terminal **1100** (in various featured configurations as described below), Management / Point-Of-Sale Tablet **1400** (or equivalent host), and Customer devices, such as a Mobile or Wearable device **1500,** and/or Coupon or Card **1800.**

In some embodiments, Terminal **1100** comprises Terminal Stand **1200** and Scanner **1300.** Terminal Stand **1200** comprises Base **1210,** and according to embodiment further comprises Support Member(s) **1220,** and Scanner Perch **1240,** providing a raised platform for captive and generally hands-free use of Scanner **1300.** Scanner Perch **1240** is enabled to position, retain, and provide power to Scanner **1300,** enabling Optical Scan Engine **1310** to decode optical scan targets (including but not limited to QR Codes and Linear barcodes) placed within Optical Scan Zone **1110** on Surface **1130.** Support Member(s) **1220** comprises, according to embodiment, one or more posts, columns, structural frameworks, articulating arms, or other elements to correspondingly position / suspend Scanner Perch **1240,** and thereby Scanner **1300** when present, with respect to Optical Scan Zone **1110.**

In some embodiments, Scanner **1300** is a cordless hand scanner, removable from Terminal Stand **1200,** optimized to operatively scan optical targets while being wielded by one hand, and comprises Optical Scan Engine **1310** and Radio Subsystem **1320.** In some embodiments, Radio Subsystem **1320** comprises a (Classic) BlueTooth Radio enabled to communicate with Management/Point-Of-Sale Tablet **1400** for receiving configuration commands and for communication of, and status about, decoded QR Codes and various other types of barcodes. In some embodiments, Scanner **1300** is integral to Terminal Stand **1200** and is not removable.

Base **1210** rests on (generally planar and level) Surface **1130** and comprises Power Subsystem **1214,** NFC-Engine **1211,** Shared Subsystem **1230,** and Beacon-Engine **1213.** Base **1210** does not require Scanner **1300** to carry out non-optical-scanning tasks. In some embodiments, Base **1210** is installed and setup by itself and without Scanner **1300,** Scanner Perch **1240,** or Support Member(s) **1220.** In some embodiments, Base **1210** is implemented separately from other elements of Terminal **1100,** e.g., in or for placement on a countertop, and Scanner **1300** is fastened to Scanner Perch **1240** (implemented mechanically independent of Base **1210).** Thus, according to embodiment, references herein to Terminal **1100,** are variously with respect to only Base **1210,** or to the combination of Base **1210** with Scanner **1300,** the latter in various embodiments held by Scanner Perch **1240** atop Support Member(s) **1220.**

NFC-Engine **1211** includes BLE Radio **1221,** and at least Antenna **1221A.** Beacon-Engine **1213** includes BLE Radio **1223,** that according to embodiment is capable of sending Beacon information (such as to Radio Subsystem **1501**). Shared Subsystem **1230** comprises functionality that is shared between NFC-Engine **1211** and Beacon-Engine **1213,** including Status UI **1231,** NVM **1232,** Display Interface **1233,** and USB I/O **1234.** In some embodiments, Shared Subsystem **1230** further comprises a shared BLE Radio replacing the individual BLE Radios of NFC-Engine **1211** and Beacon-Engine **1213.**

Status UI **1231** provides one or more of LED, tone, and vibration status indicators. The LED indicators comprise Power, BlueTooth, NFC Read, and Scanner Status. In some embodiments, NVM **1232** provides respective portions of a physically shared nonvolatile memory for each of the NFC-Engine and the Beacon-Engine for their programs and data. In some embodiments, each of the NFC-Engine and the Beacon-Engine have respective physically separate nonvolatile memories. Display Interface **1233** provides an industry-standard output for an external display (according to embodiment, one or more of DisplayPort, mini DisplayPort, HDMI, mini HDMI, VGA, or DVI). USB I/O **1234** provides (in accordance with at least one version of the USB specification) diagnostic and configuration access, including to NVM **1232** for firmware updates, and enables select external UI devices to be connected. In various embodiments, one or more of the functionalities provided by the USB I/O are provided via BLE Radio **1221** and/or BLE Radio **1223.** In some embodiments, USB I/O **1234** is omitted. Display **1225** (shown in Fig. 1 in a side/profile view, with the screen facing upward and to the left) is provided in some embodiments as a second screen to that of Management / Point-Of-Sale Tablet **1400.**

Power Subsystem **1214** is sourced power from External Power **1140.** In some embodiments, an external "power-brick" provides External Power **1140** as regulated DC power suitable for direct distribution to NFC-Engine **1211,** Shared Subsystem **1230,** Beacon-Engine **1213,** and Scanner **1300** when the latter is present. In some embodiments, External Power **1140** is AC-mains power, and Power Subsystem **1214** comprises DC regulation as appropriate for each downstream subsystem. In some embodiments, Power Subsystem **1214** includes Battery **1215.** In some embodiments, Battery **1215** is rechargeable and Power Subsystem **1214** comprises battery-charging circuitry.

Management/Point-Of-Sale Tablet **1400** comprises Radio Subsystem **1401,** Buttons **1405,** Display **1404,** Nonvolatile storage **1406,** Program Storage **1407,** and according to embodiment Database Storage **1410.** In some embodiments, Management/Point-Of-Sale Tablet **1400** is an Apple iPad running inter alia a Point-Of-Sale (POS) application on top of an Apple IOS operating system. In some embodiments, Management/Point-Of-Sale Tablet **1400** is an Android-compatible device (such as a tablet) running inter alia a Point-Of-Sale (POS) application on top of an Android operating system. In some embodiments, Management/Point-Of-Sale Tablet **1400** is a Windows-compatible device (such as a tablet) running inter alia a Point-Of-Sale (POS) application on top of a Windows operating system. In some embodiments, Radio Subsystem **1401** comprises a WiFi radio and a dual-mode Classic / BLE Bluetooth radio. In some embodiments, the Classic mode radio is used for communications with Scanner **1300** and the BLE mode is used for communications with NFC-Engine **1211** and Beacon-Engine **1213.** In some embodiments, the WiFi radio is to communicate via Private WiFi Hot Spot / Router **1601** and Private LAN **1600** with Private Local Server **1605** to access Database Storage **1610.** In some embodiments having one or more elements of Off-site **1750,** Tablet **1400** optionally also communicate via Internet **1700** with Private Remote Server **1705** to access Database Storage **1710.** The various Database Storage instances **1410, 1610,** and **1710,** are optionally used according to embodiment for one or more of syncing, backup, or caching of database subsets, in accordance with well-known methods.

Mobile or Wearable **1500** is intended to represent one of either a mobile device (such as a smartphone, or tablet, generally having a display) or a wearable device (such as a watch or fitness band, having a small or no display according to embodiment). According to embodiment, Mobile or Wearable **1500** comprises one or more of Radio Subsystem **1501,** NFC Engine **1502,** NFC NVM **1503,** Display **1504,** Buttons **1505,** and NV Storage **1506.** In some embodiments, Mobile or Wearable **1500** is a selected one of an IOS smartphone, an Android smartphone, a Windows smartphone, a BlackBerry smartphone, an Apple Watch, a Sony Smartwatch, or an NFC smart wristband, ring, bracelet, necklace, or other jewelry. According to embodiment, Radio Subsystem **1501** is enabled to receive Beacon information (such as from BLE Radio **1223**) via, e.g., an included Bluetooth/BLE capability. According to embodiment, mobile devices optionally and/or selectively connect to Internet **1700** either via an integral cellular connection or via Public WiFi Hot Spot/Router **1701.** Access to the Public Hot Spot is variously unrestricted, provided as a general customer courtesy, or selectively provided as part of a customer loyalty program (for example, to those Customers that have installed the customer loyalty application, or have met other predetermined customer loyalty criteria), according to embodiment and/or usage scenario.

Coupon or Card **1800** is intended to represent one of either a generally credit-card sized electronic identity card (frequently used for access, transit, and banking) or a printed-paper coupon. According to unclaimed embodiment, Coupon or Card **1800** comprises one or more of NFC Tag **1803,** Static QR Code **1804,** or Contactless SmartCard Chip **1805.** In some unclaimed embodiments, Coupon or Card **1800** is a selected one of an NFC Loyalty Card, a printed coupon, a QR Code Loyalty Card, or an Oyster Card.

### CUSTOMER LOYALTY TERMINAL - TEMPORAL PERSPECTIVE

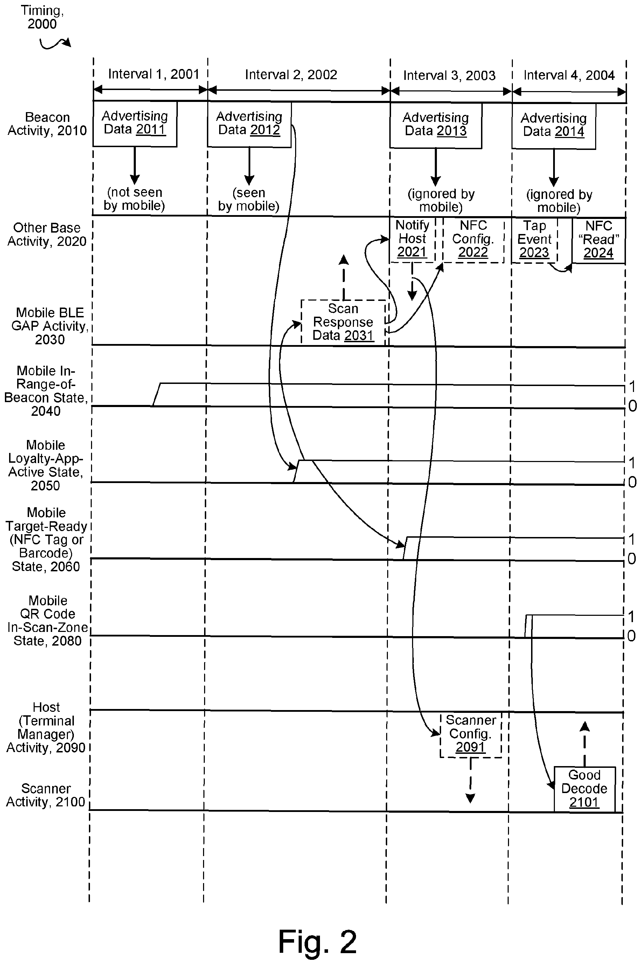

Fig. 2 illustrates, via a temporal perspective, activities, states, and interrelationships between various components of the system of Fig. 1, and in accordance with a particular scenario for a particular mobile (or wearable) device. As illustrated according to Timing **2000,** time passes (increases) conventionally from left-to-right in Fig. 2, separated into four contiguous time intervals (Interval 1 **2001,** Interval 2 **2002,** Interval 3 **2003,** and Interval 4 **2004**), each interval spanning Fig. 2 from top to bottom. The intervals are overlaid by multiple horizontal rows, each row representing the activity or state of a particular component. Causality arrows show the interrelationship between various component activities and states. The intervals are meant to be suggestive of the relative passage of time between the various components. It should not be inferred that the intervals necessarily correspond to any particular amount of time, that the respective intervals are drawn to a common scale, or that the inter-interval or intra-interval passage of time is linearly represented.

Beacon Activity **2010** comprises the broadcast of Beacon information, such as so-called Advertising Data **2011** through Advertising Data **2014,** respectively in each of the intervals. The downward arrows are intended to conceptually suggest that the broadcasts are sent toward other devices represented lower in the diagram. The parentheticals adjacent to the downward arrows are intended to respectively indicate whether each broadcast is seen, not seen, or ignored by a particular mobile device, in accordance to the scenario portrayed.

The particular mobile device of the scenario first comes in-range of the Beacon, and then stays in range of the Beacon for the remainder of Fig. 2, as illustrated by Mobile In-Range-of-Beacon State **2040.** Accordingly, the first Beacon broadcast (Advertising Data **2011**) is not seen by the particular mobile, the second Beacon broadcast (Advertising Data **2012**) is seen and acted upon, while the other Beacon broadcasts (Advertising Data **2013** and Advertising Data **2014**) are ignored by the particular mobile for the duration of the scenario. Other mobiles will have their own temporal perspective, behaving independently of the particular mobile described in the instant scenario. Limited only by resource contention for scanning codes and reading tags, from a human perspective Terminal **1100** is enabled to interact with multiple mobiles or wearables concurrently in readying respective mobile scan targets.

As a result of recognizing the second Beacon broadcast (Advertising Data **2012**) as being associated with a corresponding pre-installed software application (also known as a customer loyalty app.), the application is subsequently activated in Interval 2 **2002,** as illustrated by Mobile Loyalty-App-Active State **2050.** The now activated customer loyalty app subsequently readies a scan target (for subsequent presentation at the terminal), as portrayed by Mobile Target-Ready (NFC Tag or Barcode) State **2060.** The scan target is a custom dynamically generated NFC tag, QR Code, or other scan target, according to embodiment and configuration. In some embodiments, the scan target comprises data derived from one or more of location context provided by the Beacon payload, the mobile user's ID, and the mobile user's transaction guidance. The transaction guidance comprises selecting one or more predetermined transaction types or attributes (including but not limited to, a payment, a normal purchase, a purchase based on a standard loyalty program discount, a purchase with a special discount, a return, will-call or other pickup, placing a special order, use of cash, use of store credit, use of a credit card, use of a gift card, use of an electronic payment method, request for a printed receipt, request for an email receipt, sharing purchases to social media, "likes" or the equivalent to social media in exchange for an offered discount, spontaneous "likes", requesting an appointment, cancelling an appointment, rescheduling an appointment, checking-in for an appointment, making a suggestion, submitting a complaint, performing a price-check, performing an in-stock check, inquiring about a lost item, submitting a found item, requesting in-store directions, or requesting directions to places and services in the nearby vicinity) or otherwise sending a custom request or other message to a particular department.

The customer confirms the transaction by presenting their readied scan target at the terminal. For optical scan targets, the confirmation corresponds to placing the mobile device, wearable, coupon, or card, with the scan target upward and otherwise visible within Optical Scan Zone **1110,** as represented by Mobile QR Code in-Scan-Zone State **2080.** In some embodiments, Display **1504** displays the scan target, and the customer subsequently makes the displayed scan target visible within Optical Scan Zone **1110** for confirmation. In some unclaimed embodiments, Scanner **1330** is placed into "presentation mode" of continuously attempting to decode, awaiting the presentation of a valid code. Scanner Activity **2100** shows event Good Decode **2101** subsequent to the scan target being appropriately placed as described previously. The upward arrow of Good Decode **2101** event conceptually represents the communication of the event and the decoded barcode to Management / POS Tablet **1400** (also referred to herein as the Host, or the Terminal Manager).

For NFC scan targets, confirming the transaction corresponds to a "Tap" of the NFC tag or subsystem, such as by bringing the NFC scan target (as provided, e.g., by NFC Engine **1502**) in close proximity (roughly a centimeter) to at least one of Antenna **1221A** through Antenna **1221N,** such as illustrated by NFC Tap Zone **1120.** Providing a plurality of NFC antennas reduces the extent of customer "hunting" for where they need to place their wearable to execute a Tap. Detecting the presence of the NFC mobile device, wearable, or card, NFC-Engine **1211** proceeds to read the NFC scan target (and optionally to write the NFC scan target, in view of the NFC device presented and according to configuration). The detection and the read are respectively represented by Tap Event **2023** and NFC "Read" **2024,** both of Other Base Activity **2020.** "Other" in Other Base Activity **2020,** is used to distinguish from the Beacon Activity, as the Beacon also resides in the Base.

According to the invention, for either type of scan target (optical scan or NFC), the application prepares a customized payload, broadcast by the mobile and observed by at least the terminal prior to the user's arrival at the terminal, to optimally configure terminal operation for the upcoming transaction. The customized payload is illustrated in Fig. 2 by Scan Response Data **2031,** during Interval 2 of Mobile BLE GAP Activity **2030,** and which is caused by the activation of the customer loyalty application. In some unclaimed embodiments and according to configuration, Scan Response Data **2031** is used in lieu of (as alternative capture method) to either an NFC tap or a Barcode scan. Stated differently, the transaction confirmation information that would be conveyed in the scan target is instead conveyed entirely by Scan Response Data **2031** and there is no need for an NFC tap or a Barcode scan.

In various unclaimed embodiments, Mobile or Wearable **1500** sends data to Terminal **1100** via a mechanism other than an optical scan target or an NFC scan target, such as via BLE to elements of Base **1210** or elements of Scanner **1300.**

According to the invention, optical scan targets Scan Response Data **2031** event results in a Notify Host **2021** event during Interval 3 **2003** of Other Base Activity **2020.** The Notify Host event notifies Management / POS Tablet **1400.** The Management / POS Tablet in turn performs Scanner Config. **2091** during Interval 3 of Host (Terminal Manager) Activity **2090,** and prior to the scan target being placed in Optical Scan Zone **1110** during Interval 4 **2004,** so as to optimally configure Scanner **1300** for the particular attributes of the customer's scan target. An example usage scenario of the optimally configuring is that the customer's scan target will be a QR Code on a mobile display screen (vs. a more general-purpose and thereby less optimal configuring), as detailed in Scan Response Data **2031.** According to the invention, for the duration of a mobile QR Code scan, decoding is optimized for reflective surfaces, and illumination and aiming beam functionality are turned off.

As indicated by the customized payload, for an NFC scan-target Scan Response Data **2031** event results in NFC Config. **2022** event, during Interval 3 **2003** of Other Base Activity **2020.** The NFC Config. event provides for an optimal configuration of NFC-Engine **1211** prior to Tap Event **2023** and NFC "Read" **2024** during Interval 4 **2004.** By way of illustrative but not limiting examples, Scan Response Data **2031** indicates one or more of that: the customer's scan target is comprised in a wearable, a mobile phone, has no screen, has a screen, is an NFC loyalty card, Host Card Emulation (HCE) is being used, will be compliant in accordance with a selected one of EMV, ApplePay, SamsungPay, In-app Pay, or is compliant in accordance with a selected Digital Wallet system.

### CONCLUSION

Certain choices have been made in the description merely for convenience in preparing the text and drawings and unless there is an indication to the contrary the choices should not be construed per se as conveying additional information regarding structure or operation of the embodiments described. Examples of the choices include: the particular organization or assignment of the designations used for the figure numbering and the particular organization or assignment of the element identifiers (the callouts or numerical designators, e.g.) used to identify and reference the features and elements of the embodiments.

The words "includes" or "including" are specifically intended to be construed as abstractions describing logical sets of open-ended scope and are not meant to convey physical containment unless explicitly followed by the word "within."

Although the foregoing embodiments have been described in some detail for purposes of clarity of description and understanding, the invention is not limited to the details provided.

## Claims

1. A method performed by a terminal (1100), comprising:
transmitting a beacon (2010) comprising advertising data (2012), the advertising data being in accordance with a customer loyalty app (2050) installed on one or more mobile devices (1500,1800);
scanning a scan target (2100), the scan target being determined by an activation of the customer loyalty app on a particular one of the mobile devices (2060), the activation being responsive to at least a portion of the advertising data; and
confirming a customer transaction based on information obtained from the scan target by the scanning (2080);
wherein the transmitting is performed by a beacon transmitting subsystem (1213) and the scanning is performed by a scanning subsystem (1300,1211,1230) of the terminal, the method **characterized by**:
before the scanning, optimally configuring operation of the terminal for the customer transaction responsive to scan response data (2031) provided by the activated customer loyalty app and broadcast by the particular mobile device prior to the customer's arrival at the terminal, and wherein the scan response data comprises an indication of the scan target being one of an optical scan target and an NFC scan target and results in configuring one of optical scanning (2091) and NFC scanning (2022) respectively; and wherein
the confirming a customer transaction is by presenting the scan target on the particular mobile device at the terminal and obtaining the information by the scanning (2024, 2101); and further wherein
if the scan response data indicates that the customer's scan target comprises a QR code on a display screen (1504) of the particular mobile device, the optimally configuring comprises:
for the duration of the scanning of the QR code, illumination and aiming beam functionality being disabled and decoding being optimized for reflective surfaces.

2. The method of claim 1, wherein the beacon transmitting subsystem is comprised in a first physical element and the scanning subsystem is comprised in a second physical element.

3. A method, performed in a system (1000) comprising a terminal (1100) and one or more mobile devices (1500, 1800), the method comprising:
in a particular mobile device of the one or more mobile devices (1500,1800), receiving a beacon comprising advertising data (2012), the advertising data being in accordance with a customer loyalty app installed on the particular mobile device (2050);
in the particular mobile device and responsive to at least a portion of the advertising data, activating the customer loyalty app to determine a scan target (2060); and
providing the scan target to confirm a customer transaction via scanning the scan target (2080), wherein the scanning is performed by a scanning subsystem (1300, 1211, 1230) of the terminal; the method **characterized by** further comprising:
before the scanning, optimally configuring operation of the terminal for the customer transaction responsive to scan response data (2031) provided by the activated customer loyalty app and broadcast by the particular mobile device prior to the customer's arrival at the terminal, and wherein the scan response data comprises an indication of the scan target being one of an optical scan target and an NFC scan target and results in configuring one of optical scanning (2091) and NFC scanning (2022); and wherein
if the scan response data indicates that the customer's scan target comprises a QR code on a display screen (1504) of the particular mobile device, the optimally configuring comprises:
for the duration of the scanning of the QR code, illumination and aiming beam functionality being disabled and decoding being optimized for reflective surfaces.

4. The method of claim 1 or claim 3, wherein the scanning subsystem (1300,1211,1230) is enabled to selectively scan either of optical targets and NFC targets.

5. The method of claim 1 or claim 3, wherein the particular mobile device is at least one of a smartphone and a tablet (1500).

6. The method of claim 1 or claim 3, wherein the particular mobile device is at least one of a coupon and a card (1800).

7. The method of claim 1 or claim 3, wherein the particular mobile device is wearable (1500).

8. A terminal (1100) comprising:
means for transmitting a beacon (1213,1230,2010) comprising advertising data (2012), the advertising data being in accordance with a customer loyalty app (2050) installed on one or more mobile devices (1500,1800); and
means for scanning a scan target (1300,1211,1230,2100), the scan target being determined by an activation of the customer loyalty app on a particular one of the mobile devices (2060), the activation being responsive to at least a portion of the advertising data, and wherein the scan target comprises information to enable confirming a customer transaction (2080); the terminal **characterized in that**:
the means for scanning comprises a scanning subsystem (1300,1211,1230) that is adapted to be optimally configured, before the scanning, for a customer transaction responsive to scan response data (2031) provided by the activated customer loyalty app and broadcast by the particular mobile device prior to the customer's arrival at the terminal, and wherein the scan response data comprises an indication of the scan target being one of an optical scan target and an NFC scan target and results in configuring one of optical scanning (2091) and NFC scanning (2022) respectively; and wherein
if the scan response data indicates that the customer's scan target comprises a QR code on a display screen (1504) of the particular mobile device, the optimally configuring comprises:
for at least the duration of the scanning of the QR code, illumination and aiming beam functionality are disabled and the scanning comprises decoding optimized for reflective surfaces.

## Patentansprüche

1. Verfahren, das von einem Endgerät (1100) durchgeführt wird, umfassend:
Senden einer Bake (2010), die Werbedaten (2012) umfasst, wobei die Werbedaten mit einer App zur Kundenbindung (2050) übereinstimmen, die auf einer oder mehreren mobilen Vorrichtungen (1500, 1800) installiert ist;
Scannen eines Scanziels (2100), wobei das Scanziel durch eine Aktivierung der App zur Kundenbindung auf einer bestimmten der mobilen Vorrichtungen (2060) bestimmt wird, wobei die Aktivierung auf mindestens einen Abschnitt der Werbedaten anspricht; und
Bestätigen einer Kundentransaktion basierend auf Informationen, die von dem Scanziel durch das Scannen (2080) erhalten werden;
wobei das Senden durch ein Baken-Sende-Teilsystem (1213) durchgeführt wird und das Scannen durch ein Scan-Teilsystem (1300, 1211, 1230) des Endgeräts durchgeführt wird, wobei das Verfahren **gekennzeichnet ist durch**:
optimales Konfigurieren des Betriebs des Endgeräts für die Kundentransaktion vor dem Scannen als Antwort auf Scan-Antwortdaten (2031), die von der aktivierten App zur Kundenbindung bereitgestellt, und von der bestimmten mobilen Vorrichtung vor Ankunft des Kunden am Endgerät rundgesendet werden, und wobei die Scan-Antwortdaten eine Angabe umfassen, dass es sich bei dem Scanziel um eines von einem optischen Scanziel und einem NFC-Scanziel handelt, und zum Konfigurieren von jeweils einem von optischem Scannen (2091) und NFC-Scannen (2022) führen; und wobei
das Bestätigen einer Kundentransaktion **durch** Präsentieren des Scanziels auf der bestimmten mobilen Vorrichtung am Endgerät und Erhalten der Informationen **durch** das Scannen (2024, 2101) erfolgt; und wobei weiter,
wenn die Scan-Antwortdaten angeben, dass das Scanziel des Kunden einen QR-Code auf einem Anzeigebildschirm (1504) der bestimmten mobilen Vorrichtung umfasst, das optimale Konfigurieren umfasst:
dass Beleuchtungs- und Zielstrahlfunktionen für die Dauer des Scannens des QR-Codes deaktiviert werden, und das Decodieren für reflektierende Oberflächen optimiert wird.

2. Verfahren nach Anspruch 1, wobei das Baken-Sende-Teilsystem in einem ersten physischen Element umfasst ist und das Scan-Teilsystem in einem zweiten physischen Element umfasst ist.

3. Verfahren, das in einem System (1000) durchgeführt wird, das ein Endgerät (1100) und eine oder mehrere mobile Vorrichtungen (1500, 1800) umfasst, wobei das Verfahren umfasst:
Empfangen einer Bake, die Werbedaten (2012) umfasst, auf einer bestimmten mobilen Vorrichtung der einen oder der mehreren mobilen Vorrichtungen (1500, 1800), wobei die Werbedaten mit einer App zur Kundenbindungs übereinstimmen, die auf der bestimmten mobilen Vorrichtung (2050) installiert ist;
Aktivieren der App zur Kundenbindung auf der bestimmten mobilen Vorrichtung und als Antwort auf mindestens einen Abschnitt der Werbedaten, um ein Scanziel (2060) zu bestimmen; und
Bereitstellen des Scanziels, um eine Kundentransaktion durch Scannen des Scanziels (2080) zu bestätigen, wobei das Scannen durch ein Scan-Teilsystem (1300, 1211, 1230) des Endgeräts durchgeführt wird; wobei das Verfahren **dadurch gekennzeichnet ist, dass** es weiter umfasst:
optimales Konfigurieren des Betriebs des Endgeräts für die Kundentransaktion vor dem Scannen als Antwort auf Scan-Antwortdaten (2031), die von der aktivierten App zur Kundenbindun bereitgestellt, und von der bestimmten mobilen Vorrichtung vor Ankunft des Kunden am Endgerät rundgesendet werden, und wobei die Scan-Antwortdaten eine Angabe umfassen, dass es sich bei dem Scanziel um eines von einem optischen Scanziel und einem NFC-Scanziel handelt, und zum Konfigurieren von jeweils einem von optischem Scannen (2091) und NFC-Scannen (2022) führen; und wobei
wenn die Scan-Antwortdaten angeben, dass das Scanziel des Kunden einen QR-Code auf einem Anzeigebildschirm (1504) der bestimmten mobilen Vorrichtung umfasst, das optimale Konfigurieren umfasst:
dass Beleuchtungs- und Zielstrahlfunktionen für die Dauer des Scannens des QR-Codes deaktiviert werden, und das Decodieren für reflektierende Oberflächen optimiert wird.

4. Verfahren nach Anspruch 1 oder Anspruch 3, wobei das Scan-Teilsystem (1300, 1211, 1230) in der Lage ist, selektiv eines von optischen Zielen und NFC-Zielen zu scannen.

5. Verfahren nach Anspruch 1 oder Anspruch 3, wobei die bestimmte mobile Vorrichtung mindestens eines von einem Smartphone und einem Tablet (1500) ist.

6. Verfahren nach Anspruch 1 oder Anspruch 3, wobei die bestimmte mobile Vorrichtung mindestens eines von einem Coupon und einer Karte (1800) ist.

7. Verfahren nach Anspruch 1 oder Anspruch 3, wobei die bestimmte mobile Vorrichtung tragbar (1500) ist.

8. Endgerät (1100), umfassend:
Mittel zum Senden einer Bake (1213, 1230, 2010), die Werbedaten (2012) umfasst, wobei die Werbedaten mit einer App zur Kundenbindung (2050) übereinstimmen, die auf einer oder mehreren mobilen Vorrichtungen (1500, 1800) installiert ist; und
Mittel zum Scannen eines Scanziels (1300, 1211, 1230, 2100), wobei das Scanziel durch eine Aktivierung der App zur Kundenbindung auf einer bestimmten der mobilen Vorrichtungen (2060) bestimmt wird, wobei die Aktivierung als Antwort auf mindestens einen Abschnitt der Werbedaten erfolgt, und wobei das Scanziel Informationen umfasst, um das Bestätigen einer Kundentransaktion (2080) zu ermöglichen; wobei das Endgerät **dadurch gekennzeichnet ist, dass**:
die Mittel zum Scannen ein Scan-Teilsystem (1300, 1211, 1230) umfassen, das geeignet ist, um vor dem Scannen als Antwort auf Scan-Antwortdaten (2031), die von der aktivierten App zur Kundenbindung bereitgestellt, und von der bestimmten mobilen Vorrichtung vor Ankunft des Kunden am Endgerät rundgesendet werden, optimal für eine Kundentransaktion konfiguriert zu werden, und wobei die Scan-Antwortdaten eine Angabe umfassen, dass es sich bei dem Scanziel um eines von einem optischen Scanziel und einem NFC-Scanziel handelt, und zum Konfigurieren von jeweils einem von optischem Scannen (2091) und NFC-Scannen (2022) führen; und wobei
wenn die Scan-Antwortdaten angeben, dass das Scanziel des Kunden einen QR-Code auf einem Anzeigebildschirm (1504) der bestimmten mobilen Vorrichtung umfasst, das optimale Konfigurieren umfasst:
dass Beleuchtungs- und Zielstrahlfunktionen für mindestens die Dauer des Scannens des QR-Codes deaktiviert werden, und das Scannen das für reflektierende Oberflächen optimierte Decodieren umfasst.

## Revendications

1. Procédé réalisé par un terminal (1100), comprenant :
la transmission d'une balise (2010) comprenant des données publicitaires (2012), les données publicitaires étant conformes à une application de fidélisation de client (2050) installée sur un ou plusieurs dispositifs mobiles (1500, 1800) ;
le balayage d'une cible de balayage (2100), la cible de balayage étant déterminée par une activation de l'application de fidélisation de client sur un dispositif mobile particulier des dispositifs mobiles (2060), l'activation étant sensible à au moins une partie des données publicitaires ; et
la confirmation d'une transaction de client sur la base d'informations obtenues à partir de la cible de balayage par le balayage (2080) ;
dans lequel la transmission est effectuée par un sous-système de transmission de balise (1213) et le balayage est effectué par un sous-système de balayage (1300, 1211, 1230) du terminal, le procédé étant **caractérisé par** :
avant le balayage, la configuration optimale d'une opération du terminal pour la transaction de client en réponse aux données de réponse de balayage (2031) fournies par l'application de fidélisation de client activée et diffusées par le dispositif mobile particulier avant l'arrivée du client au terminal et dans lequel les données de réponse de balayage comprennent une indication selon laquelle la cible de balayage est l'une d'une cible de balayage optique et d'une cible de balayage NFC et ont pour résultat la configuration d'un balayage optique (2091) ou d'un balayage NFC (2022), respectivement ; et dans lequel
la confirmation d'une transaction de client consiste à présenter la cible de balayage sur le dispositif mobile particulier au niveau du terminal et à obtenir les informations par le balayage (2024, 2101) ; et en outre dans lequel
si les données de réponse de balayage indiquent que la cible de balayage de client comprend un code QR sur un écran de visualisation (1504) du dispositif mobile particulier, la configuration optimale comprend :
pendant la durée du balayage du code QR, une fonctionnalité d'éclairage et de faisceau de visée est désactivée et le décodage est optimisé pour des surfaces réfléchissantes.

2. Procédé selon la revendication 1, dans lequel le sous-système de transmission de balise est compris dans un premier élément physique et le sous-système de balayage est compris dans un second élément physique.

3. Procédé, exécuté dans un système (1000) comprenant un terminal (1100) et un ou plusieurs dispositifs mobiles (1500, 1800), le procédé comprenant :
dans un dispositif mobile particulier des un ou plusieurs dispositifs mobiles (1500, 1800), la réception d'une balise comprenant des données publicitaires (2012), les données publicitaires étant conformes à une application de fidélisation de client installée sur le dispositif mobile particulier (2050) ;
dans le dispositif mobile particulier et en réponse à au moins une partie des données publicitaires, l'activation de l'application de fidélisation de client pour déterminer une cible de balayage (2060) ; et
la fourniture de la cible de balayage pour confirmer une transaction de client par le biais d'un balayage de la cible de balayage (2080), dans lequel le balayage est effectué par un sous-système de balayage (1300, 1211, 1230) du terminal ; le procédé étant **caractérisé en ce qu'**il comprend en outre :
avant le balayage, la configuration optimale d'une opération du terminal pour la transaction de client en réponse aux données de réponse de balayage (2031) fournies par l'application de fidélisation de client activée et diffusées par le dispositif mobile particulier avant l'arrivée du client au terminal, et dans lequel les données de réponse de balayage comprennent une indication selon laquelle la cible de balayage est l'une d'une cible de balayage optique et d'une cible de balayage NFC et ont pour résultat la configuration d'un balayage optique (2091) ou d'un balayage NFC (2022) ; et dans lequel
si les données de réponse de balayage indiquent que la cible de balayage de client comprend un code QR sur un écran de visualisation (1504) du dispositif mobile particulier, la configuration optimale comprend :
pendant la durée du balayage du code QR, une fonctionnalité d'éclairage et de faisceau de visée est désactivée et le décodage est optimisé pour des surfaces réfléchissantes.

4. Procédé selon la revendication 1 ou la revendication 3, dans lequel le sous-système de balayage (1300, 1211, 1230) est activé pour balayer de manière sélective soit des cibles optiques, soit des cibles NFC.

5. Procédé selon la revendication 1 ou la revendication 3, dans lequel le dispositif mobile particulier est au moins un d'un smartphone et d'une tablette (1500).

6. Procédé selon la revendication 1 ou la revendication 3, dans lequel le dispositif mobile particulier est au moins un d'un coupon ou d'une carte (1800).

7. Procédé selon la revendication 1 ou la revendication 3, dans lequel le dispositif mobile particulier peut être porté (1500).

8. Terminal (1100) comprenant :
des moyens pour transmettre une balise (1213, 1230, 2010) comprenant des données publicitaires (2012), les données publicitaires étant conformes à une application de fidélisation de client (2050) installée sur un ou plusieurs dispositifs mobiles (1500, 1800) ; et
des moyens pour balayer une cible de balayage (1300, 1211, 1230, 2100), la cible de balayage étant déterminée par une activation de l'application de fidélisation de client sur un dispositif mobile particulier des dispositifs mobiles (2060), l'activation étant en réponse à au moins une partie des données publicitaires et dans lequel la cible de balayage comprend des informations pour permettre la confirmation d'une transaction de client (2080) ; le terminal étant **caractérisé en ce que** :
les moyens de balayage comprennent un sous-système de balayage (1300, 1211, 1230) qui est adapté pour être configuré de manière optimale, avant le balayage, pour une transaction de client en réponse à des données de réponse de balayage (2031) fournies par l'application de fidélisation de client activée et diffusées par le dispositif mobile particulier avant l'arrivée du client au niveau du terminal et dans lequel les données de réponse de balayage comprennent une indication selon laquelle la cible de balayage est l'une d'une cible de balayage optique et d'une cible de balayage NFC et ont pour résultat la configuration d'un balayage optique (2091) ou d'un balayage NFC (2022), respectivement ; et dans lequel
si les données de réponse de balayage indiquent que la cible de balayage de client comprend un code QR sur un écran de visualisation (1504) du dispositif mobile particulier, la configuration optimale comprend :
pendant au moins la durée du balayage du code QR, une fonctionnalité d'éclairage et de faisceau de visée est désactivée et le balayage comprend un décodage optimisé pour des surfaces réfléchissantes.
